Europäisches Patentamt

European Patent Office

Office européen des brevets

(19)

(11) Veröffentlichungsnummer: **0 063 163**
**B1**

(12) **EUROPÄISCHE PATENTSCHRIFT**

(45) Veröffentlichungstag der Patentschrift:
29.01.86

(51) Int. Cl.⁴: **A 23 G 1/02,** A 23 G 9/30,
A 23 L 3/00

(21) Anmeldenummer: **81102148.4**

(22) Anmeldetag: **21.03.81**

(54) Verfahren und Einrichtung zur Sterilisation von zerkleinerten, ölhaltigen Fruchtkernen wie Kakaomassen, Erdnuss-, Nuss-oder Sojapasten und dergl.

(43) Veröffentlichungstag der Anmeldung:
**27.10.82 Patentblatt 82/43**

(45) Bekanntmachung des Hinweises auf die Patenterteilung:
**29.01.86 Patentblatt 86/5**

(84) Benannte Vertragsstaaten:
**AT BE CH DE FR IT LI NL SE**

(56) Entgegenhaltungen:
**DE - A - 1 492 465**
**US - A - 3 506 254**
**US - A - 3 754 928**
**US - A - 3 885 057**
**US - A - 3 985 607**

(73) Patentinhaber: **LUWA AKTIENGESELLSCHAFT,**
**Anemonenstrasse 40, CH-8047 Zürich (CH)**

(72) Erfinder: **Schmitt, Armin, Im Birkeneck 88,**
**D-6056 Heusenstamm (DE)**

(74) Vertreter: **Wolf, Günter, Dipl.Ing. et al, Patentanwälte**
**Dipl.-Ing. Amthor Dipl.-Ing. Wolf Postfach 70 02 45 An der**
**Mainbrücke 16, D-6450 Hanau 7 (DE)**

EP 0 063 163 B1

## Beschreibung

Die Erfindung betrifft ein Verfahren und eine Einrichtung zur Sterilisation von zerkleinerten ölhaltigen Fruchtkernen, wie Kakaomassen, Erdnuss-, Nuss- oder Sojapasten und dergl.

Es zeichnet sich heute ab, dass für Lebensmittel aller Art in zunehmendem Masse mikrobiologische Standards auf nationaler und internationaler Ebene festgelegt werden. In bezug auf Kakao trifft dies in verstärktem Masse zu, da die Kakao-Anbauländer Kakao nicht nur mehr in Form von Rohkakao, sondern mit steigender Tendenz in Form des Halbfabrikates Kakaomasse auf den Markt bringen, aber auch andere ölhaltige Fruchtkerne, wie Erdnusspasten, Nusspasten, Sojapasten und dergl. Nachfolgend wird auf Kakaomassen Bezug genommen, da diese im Vordergrund stehen. Es wurden daher Richtlinien erarbeitet, die die Qualitätsanforderungen an geröstete Kakaomasse definieren.

Die nach diesen Richtlinien angegebenen und bakteriologisch zulässigen Grenzwerte lauten:

| | |
|---|---|
| Salmonellen | abwesend in 25 g |
| E-Coli | abwesend in 1 g |
| Coliforme Keime | max. 10 g |
| Schimmelpilze | max. 50 g |
| Gesamtkeimzahl | max. $2 \cdot 10^5$ g |

Die Praxis zeigt, dass die auf dem Markt angebotenen Kakaomassen in der Regel diese Werte nicht erreichen bzw. nicht unterschreiten. Es wurden nicht selten Gesamtkeimzahlen von $\geq 10^6$/g gemessen. Das Halbfabrikat Kakaomasse muss daher vor der Weiterverarbeitung zu Schokolademassen durch geeignete Massnahmen entkeimt werden, da bei keiner Verfahrensoperation der Schokolademassenherstellung Temperaturen auftreten, die eine wirksame Entkeimung gewährleisten.

Eine der wichtigsten Einflussgrössen ist dabei die sogenannte Wasseraktivität $a_w$

$$a_w = \frac{\varphi}{100} \quad (\varphi = \text{Gleichgewichtsfeuchte}),$$

die das Verhältnis des Dampfdruckes eines Lebensmittels zu demjenigen von reinem Wasser angibt.

Wasserarme Lebensmittel wie Kakaomasse sind thermisch wesentlich schwieriger zu entkeimen als wasserreiche Lebensmittel, wie beispw. Milch. So ist nachgewiesen, dass bei Salmonellen im Wasseraktivitätsbereich um 0,6 Steigerungen der Widerstandsfähigkeit gegen die letale Auswirkung von Hitze um den Faktor 1000 auftreten können. Aus diesem Grund muss das Halbfabrikat Kakaomasse vor der Weiterverarbeitung unbedingt frei von pathogenen Keimen sein.

Das feuchtthermische Abtöten von Mikroorganismen, die den vorgetrockneten, geschälten und gebrochenen Kakaobohnen, also dem Kernbruch anhaften, ist bereits bekannt, und im Prinzip werden folgende Verfahren angewandt:

a) Ein Chargenmischer, dessen Behälter mit Kernbruch gefüllt ist, wälzt diesen um. Über Düsen wird dabei 10–30% einer wässrigen Alkalilösung bzw. Wasser (bezogen auf das Kernbruchgewicht) auf den Kernbruch gleichmässig aufgesprüht und unter Druck und Temperatur über 125°C der Kernbruch behandelt. Die Behandlungszeit beträgt ca. 30 bis 60 min. Das Kerngut wird anschliessend unter Vakuum bzw. unter normalem Druck (Atmosphärendruck) getrocknet.

b) In einem Röster wird durch absatzweise Behandlung unter Druck und Temperatur in ähnlicher Weise wie unter a) die Entkeimung vorgenommen.

Diese unter a) und b) genannten und bekannten diskontinuierlichen Verfahren ermöglichen zwar das Abtöten aller pathogenen Keime, haben aber den Nachteil, dass wegen des hohen Säure- und Feuchtigkeitsgehaltes des Kernbruchs sowie der notwendigen relativ langen Behandlungszeit hierbei gleichzeitig geschmacksgebende Reaktionen (Röstreaktionen) ablaufen, die im Sinne des gewollten Röstendzustandes unspezifisch sind (schlechte Geschmacksentwicklung).

Kakaomassen, die eine solche Vorbehandlung erfahren haben, werden daher vorwiegend zur Herstellung von Kakaopulver und nur selten zur Herstellung von Schokolademassen verwendet.

Soweit bekannt, ist es bisher nicht gelungen, kontinuierlich arbeitende Anlagen zur Kakaomasse-Entkeimung zu entwickeln, die den eingangs erwähnten Forderungen entsprechen, da die teilweise diametralen Forderungen, die sich aus den Produkteigenschaften der Kakaomasse ergeben, mit Verfahrensprozessen und Einrichtungen bekannter Art nicht zu verwirklichen sind.

Einerseits ist bekannt, dass:

1. das Erhitzen von Kakaomasse in einem geschlossenen Gefäss (Druck) auf Temperaturbereiche > 100°C eine unerwünschte unspezifische Aromaentwicklung bewirkt, weil insbesondere die dabei entstehenden flüchtigen Bestandteile nicht frei abdiffundieren können;

2. dieser unter 1) genannte negative Effekt um so grösser ist, je höher insbesondere der Säuregehalt der Masse ist. Er steigt weiterhin mit der Höhe des Wassergehaltes der Masse, der Höhe der Massetemperatur und der Behandlungszeit.

3. je höher der Feuchtigkeitsgehalt (Säure + Wasser) der Kakaomasse ist, um so schlechter in der Regel deren Fliesseigenschaften werden. Das führt so weit, dass bei bestimmten Kakaosorten und Feuchtigkeitsgehalten ab $\approx 2\%$ nach oben, bei Temperaturen im Bereich von 100°C und grösser ein totales Stocken (Festwerden der Masse) eintritt, was das Pumpen und Dispergieren der Masse praktisch unmöglich macht;

4. das Absenken der Wasseraktivität (Verringerung des Wasseranteiles der Kakaomasse) die thermische Abtötbarkeit der Mikroorganismen vermindert. Die grösste Hitzeresistenz vieler Mikroorganismen liegt bei Wasseraktivitäten von ≈0,2 ... 0,3. Eine bestimmte Wasserkonzentration kann daher nicht unterschritten werden.

5. Weiterhin haben Fette protektive Wirkungen, d.h., die Kakaobutter schützt die Bakterien und Sporen vor der Hitzeeinwirkung, und dies weitgehend im Wasseraktivitätsbereich von ≈0,2 bis 0,4 aufgrund der unterschiedlichen Grössenordnungen der Temperaturleitfähigkeit und der Wasserdiffusion in das Fett.

Andererseits ist der Grad der Entkeimung um so grösser, je grösser der Wassergehalt und die Temperatur der Masse sowie die Behandlungszeit ist.

Ausserdem ist nach der US-PS 3 885 057 ein Verfahren und eine Vorrichtung bekannt, bei dem in einer zu sterilisierenden, thermolabilen Flüssigkeit durch innere Reibung Wärme erzeugt wird. Dies erfolgt in einer Weise, dass die Flüssigkeit kontinuierlich zwischen zwei, einen äusserst engen Spalt (ca. 0,3 mm) einschliessenden rotierenden Flächen bei zentraler Aufgabe unter Einwirkung der Zentrifugalkraft hindurchgeleitet wird. Wegen der engen Spaltpassage und der des Aromas ist ein solches Verfahren und eine solche Vorrichtung nicht für die hier insbesondere interessierenden Kakaomassen geeignet.

Der Erfindung liegt deshalb die Aufgabe zugrunde, ein kontinuierlich arbeitendes Verfahren und eine dafür geeignete Einrichtung zu schaffen, mit denen man in der Lage ist, die Masse im Zuge ihrer sonstigen Behandlung keimabtötend behandeln zu können, ohne dass dabei die Aromenqualität nachteilig beeinflusst wird.

Diese Aufgabe ist mit einem Verfahren nach der Erfindung durch das im Kennzeichen des Anspruches 1 Erfasste und bezüglich der Einrichtung durch das im Kennzeichen des Anspruches 4 Erfasste gelöst. Die «ca.»-Angabe im Hauptanspruch hat ihren Grund darin, dass es sich um Naturprodukte mit den allfälligen Schwankungen handelt.

Vorteilhafte Weiterbildungen bezüglich des Verfahrens ergeben sich nach den Unteransprüchen 2, 3 und bezüglich der Einrichtung nach den Unteransprüchen 5 bis 9.

Nach dem erfindungsgemässen Verfahren, bei dessen Durchführung zum Teil bekannte Apparate benutzt werden, geschieht also folgendes:

1. Kakaomasse wird zunächst in dünner Schicht in einem hierfür geeigneten Apparat (DE-Patent 1 557 184) bei Temperaturen 100°C entsäuert, teilentfeuchtet und entgast, wobei je nach Säuregrad und Wassergehalt der Kakaomasse eine wasserinjizierende Verfahrensstufe nach DE-Patent 2 313 563 (Impfanlage) vorgeschaltet wird.

2. Die aus dem Apparat nach 1) austretende, entsäuerte und entgaste Masse wird mit Hilfe einer Pumpe in den noch näher zu beschreibenden Reaktor gedrückt und dort aufgestaut, wobei – wenn erforderlich – der Wassergehalt der Masse durch eine weitere Injektion gemäss DE-Patent 2 313 563 vor Eintritt in den Reaktor angehoben wird.

3. Im Stau-Reaktor erfolgt die zeitlich und temperaturmässig gesteuerte mechanisch/thermische Behandlung der Masse, die die gewünschte Keimabtötung ohne negative Geschmacksbeeinflussung und ohne negative Strukturenveränderung der Kakaomasse ermöglicht, wobei

a) die notwendige Temperatur der Kakaomasse durch Friktion bzw. Dissipation erzielt wird, bei steilem Temperaturanstieg innerhalb der Masse,

b) die mittlere Verweilzeit der Masse im Staureaktor durch den Füllgrad sowie einer ggf. integrierten Umpumpeinrichtung in einer statistisch gesehen engen Verteilung gehalten wird und

c) geringfügige Temperaturschwankungen der Masse durch zusätzliches Heizen bzw. Kühlen der Reaktorwände über den Doppelmantel ausgeglichen werden.

4. Die den Stau-Reaktor verlassende Masse wird mit Hilfe einer weiteren Pumpe durch einen Kühler gedrückt, wobei eine Abkühlung der Masse auf Temperaturen <100°C mit Rückkondensation der Dampfphase stattfindet.

5. Die aus dem Kühler austretende Masse wird einem weiteren Dünnschichtapparat gemäss DE-Patent 1 557 184 zugeführt, worin die notwendige Restentfeuchtung und Restentgasung stattfindet.

Die dabei benutzten und bekannten Apparate werden bevorzugt verwendet, womit jedoch nicht ausgeschlossen sein soll, dass auch andere, ähnliche Wirkungen erbringende Apparaturen geeignet sind.

Die Kombination bekannter und neuentwickelter Aggregate führt dazu, dass die divergierenden Forderungen, die das zu behandelnde Produkt stellt, quasi entwirrt werden und führt zu überraschenden Ergebnissen:

So wurde bspw. bei einer Durchsatzleistung von 1000 kg/h im kontinuierlichen Betrieb, bei einer Ausgangskeimzahl der Kakaomasse von ≈ $1,2 \cdot 10^6$ Keime/g, bei einer Massetemperatur von 120°C und einer mittleren Verweilzeit der Masse im Stau-Reaktor von ≈ 1,5 min eine absolut pathogenfreie und geschmacklich unbeeinflusste Kakaomasse mit einem Endkeimgehalt von ≈ 10.000/g erreicht.

Eine Erhöhung der Massetemperatur um 5 ... 10°C im Stau-Reaktor erbrachte sogar einen Endkeimgehalt der Masse von <500/g, wobei ebenfalls noch keine signifikanten Geschmacksänderungen der Masse eintraten.

Der Wassergehalt der Kakaomasse im Reaktor betrug dabei ≈ 2,5%.

Wesentlich und von ganz entscheidender Bedeutung ist also, dass die Masse, ohne dass dabei der kontinuierliche Durchlauf unterbrochen wird, in einer mittleren Durchlaufphase aufgestaut wird, um in der aufgestauten Masse durch innere Reibung die erforderliche Temperatur zur Keimabtötung zu erzeugen.

Soweit dabei nach Merkmal c) des Anspruches 1 Wärme zu- oder abgeführt wird, hat dies letztlich seinen Grund darin, dass die durch innere Reibung erzeugte Entkeimungstemperatur auf ihrem mittleren Wert gehalten wird, um einerseits eine sichere Keimabtötung zu erzielen, andererseits aber geschmacksbeeinträchtigende Temperaturanstiege zu vermeiden.

Das erfindungsgemässe Verfahren und die Einrichtung zu seiner Durchführung werden nachfolgend anhand der zeichnerischen Darstellung von Ausführungsbeispielen näher erläutert. Es zeigen:

Fig. 1 ein Blockschaltbild der Anlage;
Fig. 2 einen Schnitt durch den Stau-Reaktor;
Fig. 3 ein radialer Ansicht ein Dissipationselement in Form eines Bügels;
Fig. 4 das Element gemäss Fig. 3 in Vorderansicht und
Fig. 5 in Draufsicht das Element gemäss Fig. 3, 4 in Zuordnung zum Rotor und der Innenwand des Stau-Reaktors.

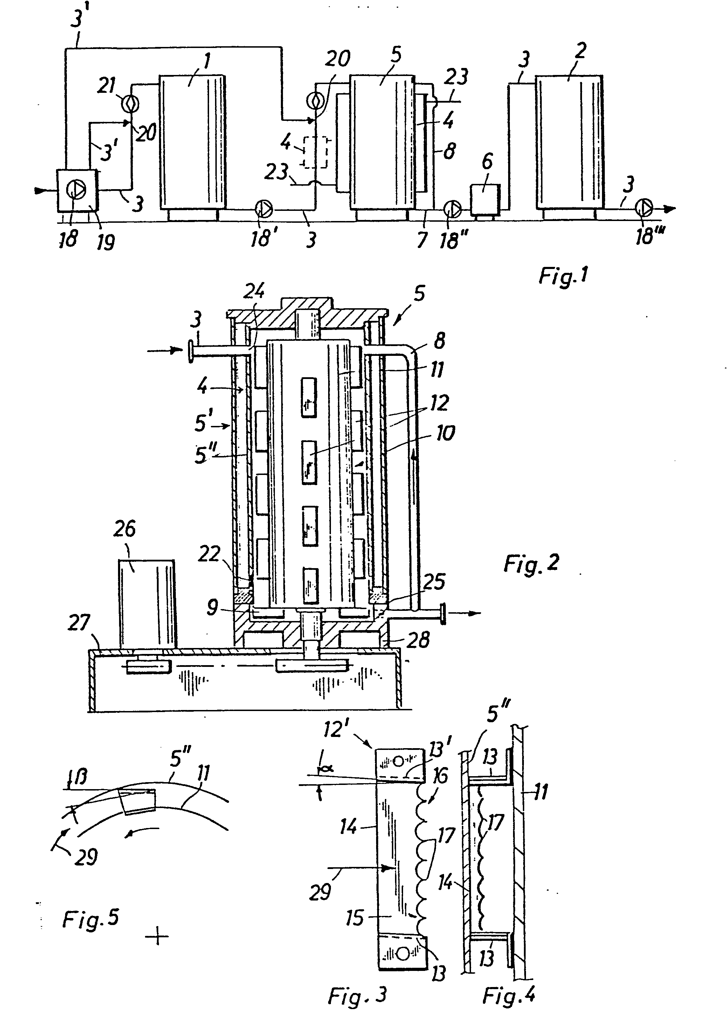

Gemäss Fig. 1 besteht die ganze Einrichtung bzw. Entkeimungsanlage im wesentlichen aus zwei gleichen Dünnschichtapparaten 1, 2 bekannter Bauart, die insoweit keiner Einzelbeschreibung bedürfen. Zwischen diesen beiden Apparaten 1, 2 ist, durch entsprechende Leitungen 3 verbunden, der Stau-Reaktor 5 angeordnet, der im Schnitt und im einzelnen in Fig. 2 verdeutlicht ist. Der Massedurchlauf erfolgt von links nach rechts und wird von Pumpen 18, 18', 18'', 18''' bewirkt. 19 ist eine Impfeinrichtung ebenfalls bekannter Bauart, von der aus über Leitungen 3' ggf. Wasser in die betreffenden Leitungen 3' bzw. in die durchströmende Masse eingeimpft werden, kann. Hinter den Impf- bzw. Einmündungsstellen 20 in den Leitungen 3 sind sogenannte statische Mischer 21, ebenfalls bekannter Bauart, eingebaut. Der Aussenwärmetauscher 4, mit dem lediglich die im Staureaktor 5 erzeugte Reibungs- und Entkeimungswärme in Balance bzw. auf einem entsprechenden Mittelwert gehalten wird, ist nach dem Ausführungsbeispiel als Doppelmantel mit in den Stau-Reaktor 5 integriert.

Es könnte aber auch ein separater Durchlaufwärmetauscher (gestrichelt in Fig. 1 angedeutet) vorgeschaltet werden.

Die von einem Thermostat 22 (Fig. 2) gesteuerte Zu- und Abfuhr des Wärmetauschmediums erfolgt über entsprechende Anschlüsse 23.

Der Stau-Reaktor 5 ist als zylindrisches, bis auf die Einlauf- und Auslauföffnungen 24, 25 geschlossenes Gehäuse 5' ausgebildet, in dem der Rotor 11 rotiert, der seinen Antrieb von einem Motor 26 erhält.

Motor 26 und Reaktor 5 sitzen gemeinsam auf einem Untergestell 27. Der zylindrische Rotor 11 begrenzt nach innen einen ringzylindrischen Stauspalt 10 und trägt auf seiner Oberfläche die Reibungs- bzw. Dissipationselemente 12, für deren Umlauf der Stauspalt 10 zur Verfügung steht.

Am unteren Ende des Rotors 11 sind Flügel angeordnet, die in Verbindung mit dem Rotor und dem Gehäuseboden 28 eine Pumpe 9 bilden.

Die Förderleistungen der Pumpen 18, 18', 18'', 18''' sind gleich, während die Leistung der Pumpe 9 etwas grösser ist, wodurch ein Fördermengenüberschuss entsteht. Da dieser Überschuss nicht von der Pumpe 18'' aufgenommen werden kann, muss die Überschussmenge durch die Zweigleitung 8 in den Staureaktor 5 zurückfliessen, dessen Stauspalt 10 mehr oder weniger noch mit Masse gefüllt ist (theoretisch kann der ganze Innenraum des Stau-Reaktors 5 gefüllt sein), d.h. die Masse liegt in diesem Reaktor nicht in dünner Schicht vor. Bei Inbetriebnahme der Einrichtung muss natürlich die ganze Anlage soweit gefüllt sein, dass sich im Reaktor 5 die gewünschte Stau- bzw. Füllstandshöhe ergibt. Erst wenn diese erreicht ist, werden die Folgepumpen 18'', 18''' in Gang gesetzt und natürlich auch der Dünnschichtapparat 2.

Die die Reibungswärme in der Masse erzeugenden Dissipationselemente 12 sind gemäss Fig. 3–5 in Form von auf die Rotoroberfläche aufgesetzten Bügeln 12' ausgebildet, die so bemessen und angeordnet sind, dass sie mit ihrer Vorderkante 14 die Innenwand 5'' bestreichen.

Um möglichst viele und starke Strömungsabrisse und damit Wirbelbildungen in der Masse zu erzeugen, sind die Flankenstege 13 um einen kleinen Winkel α gegen die Anströmrichtung 29 angestellt.

Der vertikal stehende Steg 15 ist um einen Winkel β angestellt (Fig. 5), und schliesslich ist der ganze hintere Rand 16 des Steges 15 noch mit Masseabrissspritzen 17 ausgestattet. Durch diese, mit dem Rotor 11 in der angestauten Masse umlaufenden Elemente 12 erfolgt also eine äusserst intensive Verwirbelung der Masse verbunden mit einer starken Wärmeentwicklung in der Masse. Diese Erwärmung ist zwar weitgehend homogen und ebenso die mittlere Verweilzeit der Massepartikel.

Evtl. auftretende und immerhin mögliche Abweichungen von diesen Mittelwerten wird aber entgegengewirkt und zwar bezüglich der Temperatur durch den Aussenwärmetauscher 4, der im wesentlichen eher eine Kühl- als eine Zusatzerwärmungsfunktion zu erfüllen hat und bezüglich der Verweilzeit durch die Teilrückführung der Masse über die Leitung 8.

Dadurch ist gewährleistet, dass nahezu jedes Massepartikel der unter Druck im Staureaktor 5 befindlichen Masse entsprechend lange der keimabtötenden Erwärmung bzw. Hitze ausgesetzt wird, d.h. der Stau-Reaktor gewährleistet optimale Ergebnisse, nämlich hohe Entkeimungsraten bei möglichst kurzer Verweilzeit und optimaler Temperaturbelastung der Masse dadurch, dass er

a) einen steilen Temperaturanstieg der Masse ermöglicht, also mit hoher Energiedichte arbeitet,

b) dass die Temperaturschwankungsbreite innerhalb der Masse möglichst gering gehalten wird und

c) dass ebenso die mittlere statistische Streuung der Verweilzeit der Massepartikel um ihren Sollwert ebenfalls gering gehalten wird.

Ausführungsbeispiel

| | |
|---|---|
| Höhe des Staureaktors 5: | ca. 2 m |
| Innendurchmesser (5″): | ca. 0,5 m |
| Aussendurchmesser des Rotors 11: | ca. 0,45 m |
| Drehzahl des Rotors: | ~600 min⁻¹ |
| Durchsatzleistung: | 1000 kg/h |
| Massetemperatur im Staureaktor: | ca. 120°C |
| Temperatur der Masse bei 19: | 50–60°C |
| Temperatur der Masse bei Verlassen des Kühlers 6: | 90°C |
| Temperatur der Masse hinter der Pumpe 18‴: | 80°C |
| Mittlere Verweilzeit der Masse im Staureaktor: | ~1,5 min |
| Druck im Staureaktor 5: | ca. 2 bar |

Bezüglich der erreichten Keimabtötung wird auf Spalte 4 der Einleitung verwiesen.

Der Umwälzfaktor durch die Zweigleitung 8 für die Staumasse lag etwa in der Grössenordnung eines Zehnfachen der Förderleistung der Pumpe 18″.

Messungen haben im übrigen ergeben, dass unter sonst gleichen Bedingungen Dissipationselemente 11 mit geradem hinteren Rand 16 (also ohne Abrissspitzen 17) nur etwa 1/5 der Energieumsetzung erbrachten, wie die Bügel 12′ gemäss Fig. 3.

**Patentansprüche**

1. Verfahren zur Sterilisation von zerkleinerten ölhaltigen Fruchtkernen, wie Kakaomassen, Erdnuss-, Nuss- oder Sojapasten und dergl., wobei die Masse kontinuierlich in dünner Schicht bei Temperaturen <100°C entsäuert, teilentfeuchtet und entgast und nach einer Zwischenphase die gekühlte Masse kontinuierlich in dünner Schicht einer Restentfeuchtung und Restentgasung unterzogen und zur Weiterverarbeitung mit einer der Zufördermenge entsprechenden Menge abgefördert wird, dadurch gekennzeichnet, dass in der Zwischenphase die kontinuierlich weitergeförderte Masse gestaut und in der Staumasse durch innere Reibung eine Temperatur von über 100°C bis ca. 150°C, vorzugsweise von 135°C erzeugt und die durch innere Reibung in der Staumasse erzeugte Entkeimungstemperatur durch äussere Wärmezu- und -abfuhr auf ihrem Mittelwert gehalten wird, wonach die kontinuierlich aus der Staumasse abgeführte Masse unter Rückkondensation der Dampfphase auf eine Temperatur unter 100°C abgesenkt wird, und wobei die Behandlung in der Zwischenphase in einem Staureaktor durchgeführt wird, der aus einem bis auf die Ein- und Ausmündungen geschlossenen, doppelwandigen, zylindrischen Gehäuse (5′) gebildet und in diesem ein einen zylindrischen Stauspalt (10) nach innen begrenzender Rotor (11) angeordnet ist, auf dessen Oberfläche in den Stauspalt ragende Dissipationselemente (12) angeordnet sind.

2. Verfahren nach Anspruch 1, dadurch gekennzeichnet, dass unmittelbar vor oder nach Abzug der Masse aus der Staumasse ein Masseteilstrom abgezweigt und in die Staumasse zurückgeführt wird.

3. Verfahren nach Anspruch 1 und/oder 2, dadurch gekennzeichnet, dass der kontinuierlich geförderten Masse mindestens vor Eintritt in die vor der Zwischenphase liegenden Behandlungsstufe Wasser in geringer Menge zugeimpft wird.

4. Einrichtung zur Durchführung des Verfahrens nach Anspruch 1, bestehend aus zwei durch mit Pumpen versehenen Förderleitungen verbundenen Dünnschichtbehandlungsgeräten, dadurch gekennzeichnet, dass zwischen den beiden Dünnschichtbehandlungsgeräten (1, 2) ein mit einem vorgeschalteten Aussenwärmetauscher (4) und mit einem nachgeschalteten Durchlaufkühler (6) versehener Staumassenreaktor (5) angeordnet ist, der aus einem bis auf die Ein- und Ausmündungen geschlossenen, doppelwandigen, zylindrischen Gehäuse (5′) gebildet und in diesem ein einen zylindrischen Stauspalt (10) nach innen begrenzender Rotor (11) angeordnet ist, auf dessen Oberfläche in den Stauspalt ragende Dissipationselemente (12) angeordnet sind.

5. Einrichtung nach Anspruch 4, dadurch gekennzeichnet, dass vom Auslaufanschluss (7) im unteren Bereich des Staumassenreaktors (5) eine in diesen zurückführende Zweigleitung (8) angeordnet ist, die in den oberen Bereich des Staumassenreaktors (5) einmündend angeordnet ist.

6. Einrichtung nach Anspruch 5, dadurch gekennzeichnet, dass der Staumassenreaktor (5) auslaufseitig und vor der Zweigleitung (8) mit einer Pumpe (9) versehen ist, deren Fördermenge der kontinuierlichen Fördermenge der Masse zuzüglich der Fördermenge des abgezweigten Masseteilstromes entspricht.

7. Einrichtung nach Anspruch 4, dadurch gekennzeichnet, dass die Dissipationselemente (12) in Form von Bügeln (12′) ausgebildet sind.

8. Einrichtung nach Anspruch 7, dadurch gekennzeichnet, dass die Flankenstege (13) des Bügels (12′) in bezug auf die Horizontale und auch die Vertikale mit seiner Vorderkante (14) mit der Zylinderinnenwand (5″) in Berührungskontakt stehende Steg (15) des Bügels winklig angestellt ausgebildet sind.

9. Einrichtung nach Anspruch 7 und/oder 8, dadurch gekennzeichnet, dass der hintere Rand (16) des Bügels (12′) mit Masseabrissspitzen (17) versehen ist.

**Claims**

1. Process for sterilising comminuted oil-containing fruit kernels, such as cocoa pastes or groundnut, nut or soya pastes and the like, the paste in a thin layer being continuously deacidified, partially demoisturised and degassed at temperatures <100°C and, after an intervening phase, the cold paste being continuously subjected in a thin layer to residual demoisturising and residual degassing and being discharged for further processing at a rate corresponding to the feed rate, characterised in that, in the intervening phase, the paste continuously conveyed onward is held up and a temperature of over 100°C up to about 150°C, preferably 135°C, is generated in the held-up paste by internal friction and the sterilisation temperature generated in the held-up paste by internal friction is maintained at its mean value by external heat supply and removal, after which the paste continuously taken off from the held-up paste is brought to a temperature below 100°C, with recondensation of the vapour phase, the treatment in the intervening phase being carried out in a hold-up reactor which is formed by a double-walled cylindrical casing (5'), which is closed except for the inlets and outlets, and in which a rotor (11) is arranged which limits a cylindrical holding-up gap (10) inwards and on the surface of which dissipation elements (12) protruding into the holding-up gap are arranged.

2. Process according to Claim 1, characterised in that, immediately before or after a discharge of paste from the held-up paste, a partial stream of paste is branched off and recycled into the held-up paste.

3. Process according to Claim 1 and/or 2, characterised in that a small quantity of water is injected into the continuously conveyed paste at least before entry into the treatment stage located upstream of the intervening phase.

4. Equipment for carrying out the process according to Claim 1, consisting of two thin-layer treatment units connected by conveying lines provided with pumps, characterised in that, between the two thin-layer treatment units (1, 2), a hold-up reactor (5) is located which is provided with an upstream external heat exchanger (4) and a downstream continuous cooler (6) and which is formed from a double-walled cylindrical casing (5'), which is closed except for the inlets and outlets, and in which a rotor (11) is arranged which limits a cylindrical holding-up gap (10) inwards and on the surface of which dissipation elements (12) protruding into the holding-up gap are arranged.

5. Equipment according to Claim 4, characterised in that a branch line (8) is provided which leads from the outlet connection (7) in the lower region of the hold-up paste reactor (5) back into the latter and which is arranged to end in the upper region of the hold-up paste reactor (5).

6. Equipment according to Claim 5, characterised in that the old-up paste reactor (5) is provided on the outlet side and upstream of the branch line (8) with a pump (9), the delivery rate of which corresponds to the continuous flow rate of the paste plus the flow rate of the branched-off partial stream of paste.

7. Equipment according to Claim 4, characterised in that the dissipation elements (12) are formed in the shape of straps (12').

8. Equipment according to Claim 7, characterised in that the flank webs (13) of the strap (12') are shaped to be set at an angle, relative to both the horizontal and the vertical, to the strap web (15), the front edge (14) of which is in touching contact with the inner cylinder wall (5").

9. Equipment according to Claim 7 and/or 8, characterised in that the rear edge (16) of the strap (12') is provided with break-off tips (17) for the paste.

**Revendications**

1. Procédé pour la stérilisation de noyaux de fruits oléagineux broyés, tels que des masses de cacao, des pâtes d'arachides, de noix ou de soja et analogues, selon lequel la masse est désacidifiée, déshydratée partiellement et dégazée en continu, sous la forme d'une couche mince, à des températures <100°C, et, lors d'une phase intermédiaire, la masse refroidie est soumise en continu, sous la forme d'une couche mince, à une déshydratation résiduelle et à un dégazage résiduel et est évacuée en vue de son traitement ultérieur avec une quantité correspondant à la quantité entraînée, caractérisé en ce que pendant la phase intermédiaire, la masse entraînée de façon continue est accumulée et qu'une température comprise entre plus de 100°C et environ 150°C et égale de préférence à 135°C est produite par suite du frottement interne, dans la masse accumulée, et la température de stérilisation, produite sous l'effet du frottement interne dans la masse accumulée est maintenue à une valeur moyenne par suite de l'arrivée et de l'évacuation extérieures de chaleur, après quoi la température de la masse, qui est évacuée en continu à partir de la masse accumulée, est abaissée à une valeur inférieure à 100°C par suite de la condensation en retour de la phase vapeur, le traitement lors de la phase intermédiaire étant exécuté dans un réacteur d'accumulation, qui est formé par un boîtier cylindrique (5') à paroi double, fermé hormis au niveau d'ouvertures d'admission et de sortie et dans lequel se trouve disposé un rotor (11) limitant vers l'intérieur une fente cylindrique d'accumulation (10) et sur la surface duquel se trouvent disposés des organes de dissipation (12) en saillie à l'intérieur de la fente.

2. Procédé selon la revendication 1, caractérisé en ce qu'aussitôt avant ou après le soutirage de la masse à partir de la masse accumulée un courant partiel de cette masse est dérivé et est renvoyé à la masse accumulée.

3. Procédé selon la revendication 1 et/ou 2, caractérisé en ce que de l'eau est envoyée en une faible quantité à la masse entraînée en continu, au moins avant l'entrée dans l'étage de traitement situé avant la phase intermédiaire.

4. Dispositif pour la mise en œuvre du procédé selon la revendication 1, constitué par deux appareils de traitement de couches minces reliés par des canalisations d'entraînement munies de pompes, caractérisé en ce qu'entre les deux appareils (1, 2) de traitement de couches minces se trouve disposé un réacteur (5) d'accumulation de la masse, qui est muni d'un échangeur de chaleur (4) monté en amont et est muni d'un dispositif de refroidissement à traversée (6) monté en aval, et qui est formé par un boîtier cylindrique (5') à paroi double, fermé hormis au niveau des ouvertures d'admission et de sortie, et dans lequel se trouve disposé un rotor (11) limitant vers l'intérieur une fente cylindrique d'accumulation (10) et sur la surface duquel se trouvent disposés des organes de dissipation (12) en saillie à l'intérieur de la fente.

5. Dispositif selon la revendication 4, caractérisé en ce qu'à partir du raccord de sortie (7) s'étend, dans la partie inférieure du réacteur (5) d'accumulation de la masse, une canalisation de dérivation (8) retournant à ce réacteur et qui est disposée de manière à déboucher dans la partie supérieure du réacteur (5) d'accumulation de la masse.

6. Dispositif selon la revendication 5, caractérisé en ce que le réacteur (5) d'accumulation de masse comporte, sur le côté sortie et en amont de la canalisation de dérivation (8), une pompe (9) dont le débit de transport correspond au débit continu de transport de la masse plus le débit de transport de l'écoulement partiel de masse dérivé.

7. Dispositif selon la revendication 4, caractérisé en ce que les organes de dissipation (12) sont réalisés sous la forme d'étriers (12').

8. Dispositif selon la revendication 7, caractérisé en ce que les branches latérales (13) de l'étrier (12') sont inclinées par rapport à la partie horizontale et également par rapport à la partie verticale de l'âme (15) de l'étrier, qui est en contact par son bord avant (14) avec la paroi intérieure cylindrique (5'').

9. Dispositif selon la revendication 7 et/ou 8, caractérisé en ce que le bord arrière (16) de l'étrier (12') comporte des pointes (17) d'arrachement de la masse.

Fig. 1

Fig. 2

Fig. 5

Fig. 3

Fig. 4